**Europäisches Patentamt**

(19) **European Patent Office**

**Office européen des brevets**

(11) Numéro de publication: **0 014 152
B1**

(12) **FASCICULE DE BREVET EUROPEEN**

(45) Date de publication du fascicule du brevet:
**23.02.83**

(51) Int. Cl.³: **H 04 L 11/20,** H 04 Q 11/04,
H 04 Q 3/68

(21) Numéro de dépôt: **80400108.9**

(22) Date de dépôt: **23.01.80**

(54) **Opérateur pour réseau de commutation de données numériques par paquets.**

(30) Priorité: **24.01.79 FR 7901792**

(43) Date de publication de la demande:
**06.08.80 Bulletin 80/16**

(45) Mention de la délivrance du brevet:
**23.02.83 Bulletin 83/8**

(84) Etats contractants désignés:
**BE DE GB IT NL SE**

(56) Documents cités:
**EP-A-0 006 798
FR-A-2 309 088**

(73) Titulaire: **THOMSON-CSF TELEPHONE, 146, Boulevard
de Valmy, F-92707 Colombes (FR)**

(72) Inventeur: **Bakka, Raymond, THOMSON-CSF 46 Quai
Alphonse Le Gallo, F-92103 Boulogne Billancourt Cedex
(FR)**
Inventeur: **Dieudonne, Marc, Paul, Georges,
THOMSON-CSF 46 Quai Alphonse Le Gallo,
F-92103 Boulogne Billancourt Cedex (FR)**

(74) Mandataire: **Thrierr, Francoise et al, THOMSON-CSF
SCPI 173, Bld Haussmann, F-75379 Paris Cedex 08 (FR)**

## Operateur pour reseau de commutation de données numeriques par paquets

L'invention concerne un opérateur de commutation pour données numériques par paquets, pour réseau de commutation de centre de télécommunications et notamment pour réseau de commutation à structure répartie.

On appelle réseau de commutation un «maillage» qui comporte à chaque noeud un opérateur de commutation ou commutateur et dont les mailles sont constituées par des voies de transmission de données numériques, chaque voie reliant deux opérateurs et comportant les deux sens de commutations; pour traverser un commutateur chaque paquet passe d'une voie aval à une voie amont.

L'opérateur, selon l'invention, concerne plus particulièrement la commutation de données numériques par paquets «autodirecteurs», c'est-à-dire que chaque paquet comporte un en-tête qui comprend autant d'étiquettes de sélection que de commutateurs que le paquet doit traverser dans le réseau, chaque étiquette de sélection étant associée à un commutateur et indiquant l'identité de la voie aval à sélectionner, et dans laquelle les étiquettes de sélection sont rangées dans l'ordre des commutateurs que le message doit traverser.

Pour commuter des paquets autodirecteurs, les commutateurs doivent comporter des moyens pour sélectionner dans l'en-tête l'étiquette de sélection qui leur correspond et des moyens pour fair passer le message de la voie amont à la voie aval en fonction de l'identité de la voie contenue dans l'étiquette de sélection sélectionnée.

Dans un système connu de commutation de données numériques par paquets autodirecteurs, les moyens comportent des champs de couplage de présélection et de sélection ou sélecteurs comportant des points de croisement électromagnétiques.

D'autre part, dans les systèmes de l'art antérieur, tels que décrits dans le document FR-A-2 309 088, on ne tient pas compte des temps de commutation car les données transmises ne comportent pas d'importantes contraintes de temps.

L'opérateur de commutation selon l'invention, totalement électronique, a une gestion entièrement indépendante notamment grâce au microcalculateur qu'il contient et offre un temps de commutation suffisamment court pour permettre son utilisation pour la commutation de données téléphoniques, grace au mode de connexion conformément aux revendication 1 ou 12.

Selon un mode de réalisation de l'invention, chaque circuit de réception comporte des moyens de synchronisation au niveau «horloges» et au niveau «paquets», des moyens de sélection et de décodage de l'étiquette qui fournit l'adresse de sortie, des moyens de contrôle de parité, des moyens de reconstitution du paquet après élimination de l'étiquette utilisée et des moyens pour fournir un signal du début de paquet reconstitué.

Selon une variante de réalisation de l'invention, chaque circuit d'émission comporte des moyens de stockage en n files d'attente, des moyens d'établissement de priorité, des moyens de recadrage et d'émission des paquets et des moyens de gestion de l'émission.

Les objets et caractéristiques de la présente invention apparaîtront plus clairement à la lecture de la description suivante d'un exemple de réalisation, ladite description étant faite en relation avec les dessins ci-annexés dans lesquels:

– la figure 1 représente un exemple de réseau de commutation dans lequel des opérateurs conformes à l'invention sont utilisés;

– la figure 2 donne le schéma de principe de l'interface vers l'intérieur du réseau d'un opérateur conforme à l'invention;

– les figures 3a et 3b représentent deux possibilités de liaison entre interfaces vers l'intérieur et vers l'extérieur;

– la figure 4 illustre le protocole de connexion utilisé dans le réseau décrit;

– la figure 5 représente schématiquement un circuit de réception pour une interface telle que celle représentée à la figure 2;

– la figure 6a représente en détail un circuit de synchronisation au niveau «horloges» représenté par un bloc à la figure 5;

– la figure 6b représente un diagramme de fonctionnement du circuit représenté à la figure 6a;

– la figure 7 représente, en détail, un circuit de synchronisation au niveau «paquets»;

– la figure 8 représente schématiquement un circuit d'émission pour une interface telle que celle représentée à la figure 2;

– la figure 9 représente, en détail, un circuit d'établissement des priorités représenté par un bloc à la figure 8;

– la figure 10 représente l'allure des signaux du circuit de gestion de l'émission des paquets représenté à la figure 8.

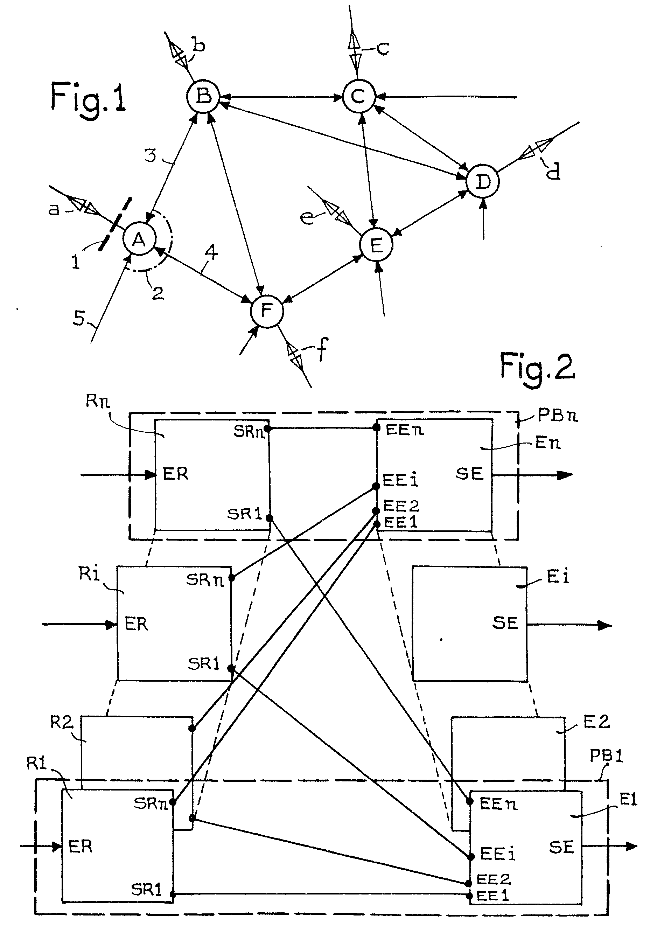

La figure 1 représente l'agencement général d'un réseau de commutation dans lequel on utilise des opérateurs conformes à l'invention.

A chaque nœud, le réseau comporte un opérateur ou commutateur tel que A, B, C, D, E et F. Chaque opérateur comporte un microcalculateur dont le volume des informations qu'il peut traiter fixe la puissance de l'opérateur.

Chaque opérateur possède également une interface vers l'extérieur connectée à une jonction, elle-même reliée à l'extérieur du réseau de commutation. Ainsi, pour l'opérateur A l'interface 1 vers l'extérieur est connectée à la jonction a. Cette interface vers l'extérieur a pour fonction d'assurer avec l'aide du microcalculateur d'une part la réception et l'émission des messages de et vers l'extérieur du réseau, d'autre part la détermination du chemin à parcourir à travers le réseau et l'inscription de l'en-tête de chaque paquet. En outre cette interface vers l'extérieur traite les paquets erronés.

Cette interface vers l'extérieur n'est pas décrite car elle n'est pas l'objet du brevet.

Chaque opérateur possède enfin une interface vers l'intérieur connectée au moins à un autre opérateur du réseau et au plus à tous les autres opérateurs du réseau. Ces liaisons ou mailles du réseau sont constituées par des voies qui comportent les deux sens de communications.

Par exemple, pour l'opérateur A l'interface 2 vers l'intérieur est connectée à l'opérateur B par la voie 3, à l'opérateur F par la voie 4 et à un autre opérateur du réseau par la voie 5.

C'est cette interface vers l'intérieur du réseau, appelée aussi niveau de commutation et représentée à la figure 2, qui est l'objet du brevet.

Dans l'exemple représenté à la figure 2, l'interface comporte n portes bidirectionnelles; dans la pratique ce nombre est modifiable. Ces n portes bidirectionnelles PB1 à PBn comportent chacune un circuit de réception et d'aiguillage Ri et un circuit d'émission Ei (i = 1 à n).

L'ensemble des circuits de réception des portes d'une même interface est appelé étage de réception, l'ensemble des circuits d'émission des portes d'une même interface est appelé étage d'émission.

Chaque circuit de réception comporte une entrée ER connectée à une maille du réseau et n sorties SR1 à SRn reliées chacune à l'une des entrées de l'un des n circuits de l'étage d'émission.

Chaque circuit d'émission comporte n entrées EE1 à EEn connectées chacune à l'une des sorties de l'un des n circuits de l'étage de réception et une sortie SE reliée à une maille du réseau.

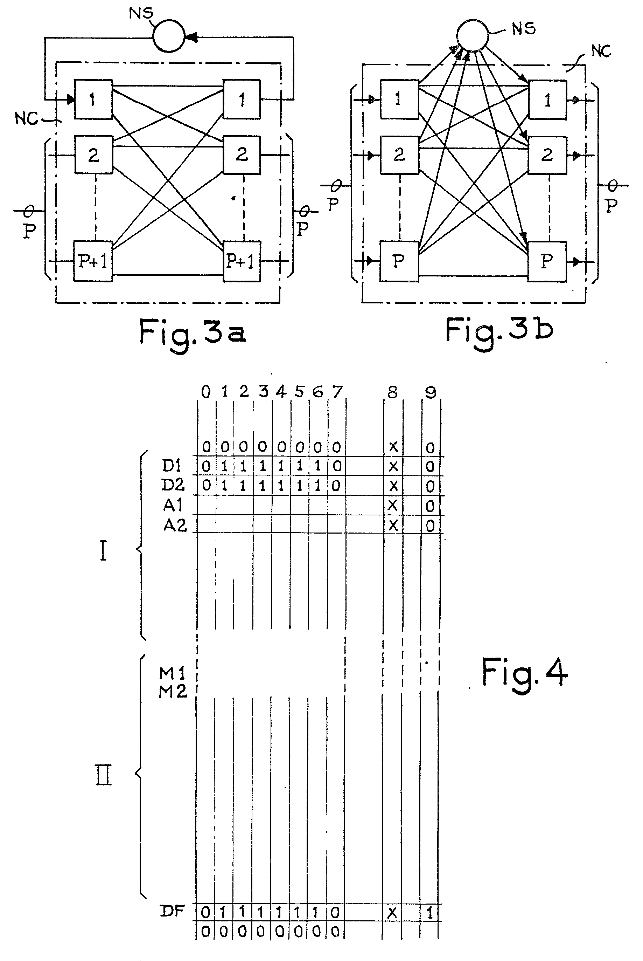

Les figures 3a et 3b représentent deux possibilités d'interconnexion entre l'interface vers l'intérieur ou niveau de commutation telle que décrite à la figure 2 et l'ensemble constitué par le microcalculateur et l'interface vers l'extérieur, que l'on appelle le niveau supérieur de l'opérateur.

A la figure 3a, le niveau supérieur NS accède aux entrées/sorties du niveau de commutation NC comme n'importe quel opérateur du réseau. L'opérateur étant relié à p autres opérateurs du réseau, l'étage de réception de NC comporte p + 1 circuits de réception qui ont p + 1 sorties et l'étage d'émission de NC comporte p + 1 circuits d'émission qui ont p + 1 entrées.

A la figure 3b, le niveau supérieur NS accède au niveau de commutation directement par les portes d'entrées/sorties. L'opérateur étant relié à p autres opérateurs du réseau, l'étage de réception de NC comporte p circuits de réception qui ont p + 1 sorties et l'étage d'émission de NC comporte p circuits d'émission qui on p + 1 entrées.

Pour décrire de façon détaillée un exemple de réalisation du niveau de commutation, il faut connaître le protocole de connexion utilisé dans le réseau.

Dans la réalisation décrite ci-après, les paquets de données sont transmis en parallèle sur m fils, m étant choisi égal à huit pour la suite de la description, les paquets de données étant alors transmis par octets, et deux fils supplémentaires transmettant l'un un élément binaire de contrôle de parité, l'autre un élément binaire qui est au niveau logique haut, désigné par «1», pour indiquer la fin d'un paquet.

Le protocole utilisé dans l'exemple est illustré à la figure 4. Les fils 0 à 7 transmettent les données, le fil 8 l'élément binaire de parité et le fil 9 l'indication de fin de paquet.

En l'absence de paquet, des octets de code repos («00000000») sont transmis et entre chaque paquet on transmet au moins un octet de ce type afin de permettre la resynchronisation dans le cas d'une longue suite de paquets, comme on le verra par la suite.

Un début de paquet se caractérise par deux octets successifs D1 et D2 de code «01111110» appelé drapeau.

Les octets de début sont suivis par un champ d'adresse I, dans lequel chaque adresse occupe un octet, la valeur de code «01111110» étant interdite.

Le champ de données II fait suite au champ d'adresse I sans transition et tous les codes sont autorisés.

Une fin de paquet est indiquée par à la fois un élément binaire à «1» sur le fil 9 et une configuration de drapeau DF sur les huit fils de transmission de données.

Les paquets étant autodirecteurs, comme cela a été expliqué plus haut, l'étiquette à utiliser pour commuter se situe toujours dans l'octet A1 qui suit le dernier octet qui a la configuration du drapeau.

La taille des champs d'adresse et de données n'étant pas limitée, les paquets peuvent être de longueur quelconque.

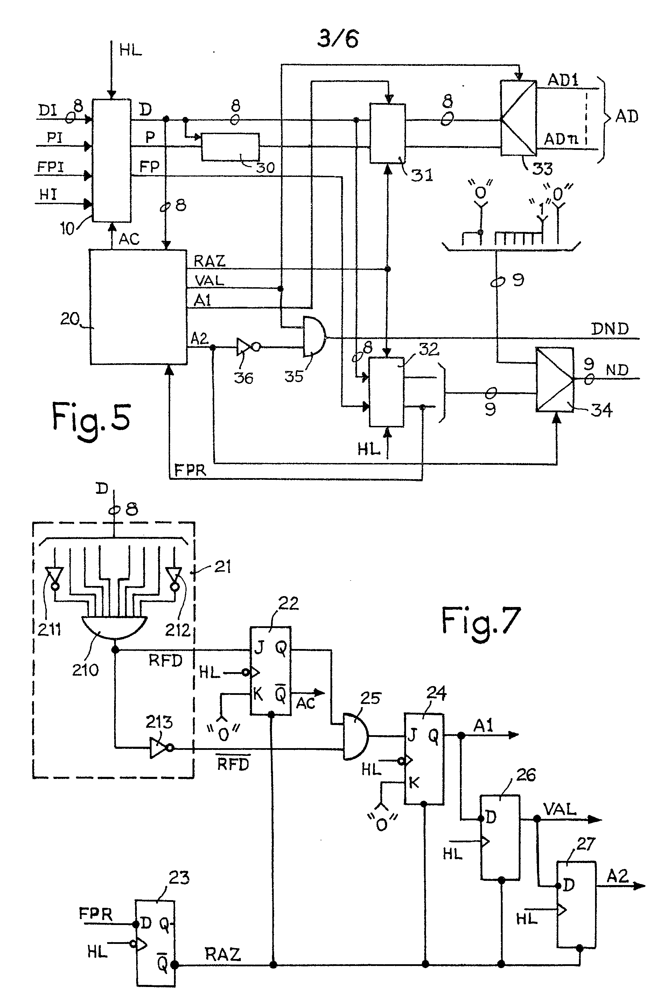

A la figure 5, on a schématisé un circuit de réception qui comporte, en entrée, un circuit de synchronisation 10 au niveau «horloges» qui reçoit sur huit fils les signaux de données DI, sur un 9ème fil le signal de contrôle de parité PI et sur un 10ème fil le signal de fin de paquet FPI, ces signaux étant reçus au rythme de l'horloge incidente HI.

Les horloges de tous les opérateurs du réseau ont même fréquence nominale, mais cette cadence varie dans des limites spécifiées: on dit que le réseau est plésiochrone.

Le circuit de synchronisation au niveau «horloges» fournit des signaux D, P et FP identiques aux signaux reçus, mais au rythme de l'horloge locale HL.

Le circuit 10 est décrit de façon détaillée, à la figure 6a. Il comporte deux registres 11 et 12 à 10 éléments binaires qui reçoivent en entrée les signaux incidents DI, PI et FPI, et dont les sorties sont reliées à un multiplexeur 13 de sortie qui fournit les signaux D, P et FP.

Les deux registres 11 et 12 sont commandés respectivement par les signaux de chargement C1 et C2 provenant d'un circuit logique commun d'écriture alternée 14. Ce circuit 14 est constitué par une bascule 140 du type JK dont les entrées J et K sont au niveau logique «1» et qui est activée par les fronts montants du signal d'horloge HI.

Le signal C1 est issu d'une porte logique «ET» 141 qui est reliée d'une part à la sortie Q de la bascule 140, d'autre part à la sortie d'un inverseur 143 qui reçoit le signal HI. Le signal C2 est issu d'une porte logique.«ET» 142 qui est reliée d'une part à la sortie $\overline{Q}$ de la bascule 140, d'autre part à la sortie de l'inverseur 143.

Le multiplexeur 13 est commandé par un signal L de lecture provenant d'un circuit de lecture 15 constitué par une bascule 150 de type JK précédée par une logique de correction du déphasage.

La logique de correction comprend une bascule 151 de type D qui est activée par les fronts descendants du signal HL, et qui reçoit en entrée D un signal CC issu de la sortie d'une porte «NON OU EXCLUSIF» 152 qui reçoit le signal E issu de la sortie Q de la bascule 140 et le signal L issu de la bascule 150.

Les entrées J et K de la bascule 150 sont au niveau logique «1» et elle est activée par les fronts montants d'un signal HJK issu d'une porte logique «ET» 153 dont l'une des entrées est reliée à l'horloge locale HL et l'autre à la sortie d'une porte logique «NON–ET» 154 qui reçoit d'une part un signal SD issu de la bascule 151, d'autre part un signal AC d'autorisation de correction.

Ce signal AC, qui provient d'un circuit 20 (voir figure 5) de synchronisation au niveau «paquets», est à «1» en absence de paquet et à «0» en présence de paquet. Ainsi, l'autorisation de correction n'est donnée qu'en absence de paquet et on évite ainsi toute modification des données lors d'une opération de synchronisation.

Mais, cette condition impose de détecter un besoin de correction suffisamment tôt pour qu'il soit retardé dans son exécution à la fin du paquet. En d'autres termes, le temps disponible entre le moment où une correction est envisagée et le moment où celle-ci devient obligatoire doit être supérieur au temps de réception du paquet ce qui entraîne des contraintes sur la précision de l'horloge.

Le circuit 10 fonctionne selon le principe suivant: les données sont inscrites dans des registres de mémorisation intermédiaires au rythme de l'horloge distante HI et la lecture est effectuée au rythme de l'horloge locale HL.

Pour éviter toute difficulté, on utilise deux registres 11 et 12 de mémorisation de telle sorte que lorsque l'on écrit dans l'un, on lit dans l'autre et inversement.

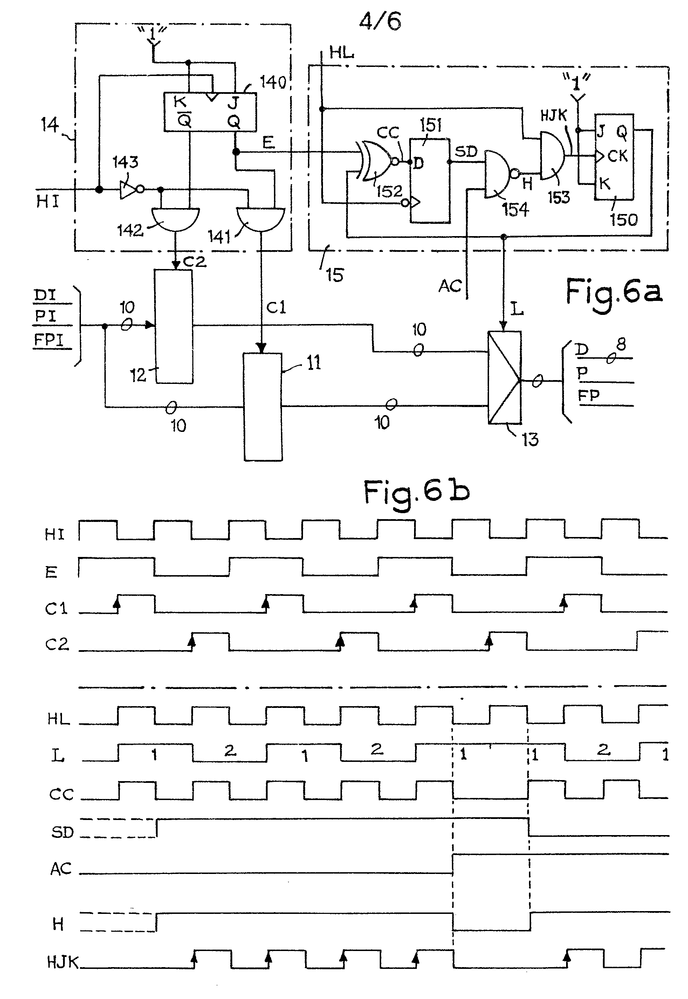

Les signaux relatifs à ce circuit 10 sont représentés à la figure 6b. On a tracé tout d'abord, les signaux concernant l'écriture c'est-à-dire HI, E, C1 et C2 qui sont synchrones de HI. A chaque front montant de C1 on écrit dans le registre 11 et à chaque front montant de C2 on écrit dans le registre 12. On écrit donc alternativement dans 11 et 12.

Pour les signaux suivants qui concernent la lecture et sont synchrones de HL, on se place initialement dans un cas où il y a une demande de correction (SD = «1») et où il n'y a pas autorisation de correction (AC = «0»).

Le registre 11 est lu quand L est à «1» et le registre 12 quand L est à «0». Lorsque la lecture d'un registre se rapproche trop de l'opération d'écriture, c'est-à-dire lorsqu'elle entre dans un intervalle qui est situé autour de l'instant d'écriture et qui définit un temps de garde représenté ici par le signal E, on a une demande de correction c'est-à-dire que SD passe à «1» et y reste jusqu'à ce que la correction soit effectuée.

Quand AC passe à «1», on effectue la correction c'est-à-dir que l'on supprime une impulsion de l'horloge HJK ce qui a pour effet de supprimer un temps de lecture. Ainsi, sur notre diagramme la fréquence de HL étant supérieure à celle de HI, on a supprimé un temps de lecture du registre 12 et on lira donc deux fois de suite le contenu du registre 11; mais comme cette lecture se produit en l'absence de paquet on lit deux codes repos ou à la limite on lit deux configurations du drapeau. C'est pourquoi, à la sortie du circuit 10, un paquet peut être parfois précédé de trois octets ayant la configuration du drapeau.

Dans le cas où la fréquence HL est inférieure à celle de HI, la correction amène à supprimer la lecture d'un mot d'information; mais comme cette suppression s'effectue en l'absence de paquet, on supprime un code repos ou à la limite un octet ayant la configuration du drapeau. C'est pourquoi, il est nécessaire d'une part de faire précéder les paquets de deux octets ayant la configuration du drapeau afin qu'il en reste toujours au moins un, d'autre part d'avoir au moins un code repos entre deux paquets.

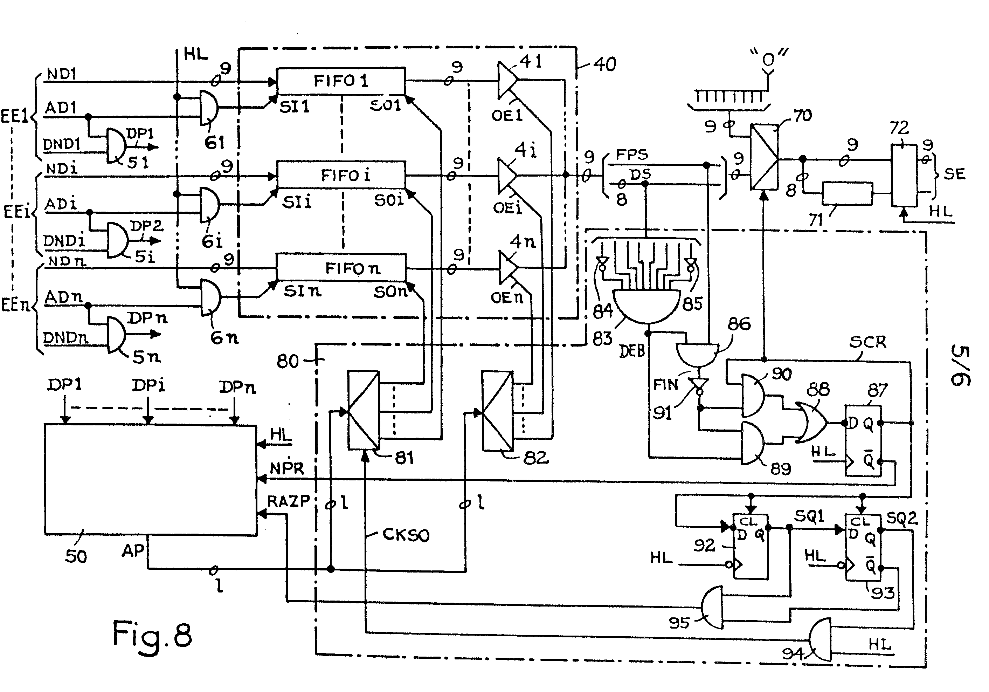

A la figure 7, on a représenté en détail le circuit 20 de synchronisation au niveau «paquets».

Ce circuit 20 comporte, tout d'abord, un circuit 21 de reconnaissance de la configuration de drapeau qui reçoit les données D issues du circuit 10 sur 8 fils en parallèle. Ce circuit 21 comporte une porte logique «ET» 210 qui est reliée à la sortie d'un inverseur 211 dont l'entrée est connectée au premier fil de données, à la sorsortie d'un inverseur 212 dont l'entrée est connectée au huitième fil de données, et, aux six autres fils de données.

Le circuit 21 fournit un signal RFD de reconnaissance de drapeau, issu de la porte «ET» 210, qui est à «1» quand il y a un drapeau à l'entrée et à «0» quand il n'y en a pas. Le circuit 21 fournit également à l'aide de l'inverseur 213 le signal inverse $\overline{RFD}$.

Le circuit 21 est immédiatement suivi par une bascule 22 d'élaboration du signal AC d'autorisation de correction, défini plus haut; cette bascule 22 de type JK est activée par les fronts descendants du signal d'horloge locale HL, son entrée J reçoit le signal RFD de reconnaissance de drapeau et son entrée K est en permanence au niveau logique bas «0» de telle sorte que si la sortie Q passe à «1», elle y reste jusqu'à la remise à zéro et ceci quel que soit le signal présent en J.

Le signal AC est obtenu à la sortie $\overline{Q}$ de la bascule 22; il passe à zéro, dès que le premier octet ayant la configuration de drapeau apparaît, et y demeure jusqu'à la remise à zéro de la bascule par un signal RAZ, à la fin de chaque paquet.

Le signal RAZ est obtenu à la sortie $\overline{Q}$ d'une

bascule 23 de type D activée par les fronts descendants du signal de l'horloge locale HL et qui reçoit en entrée D un signal de fin de paquet retardée FPR.

Le circuit 20 comporte, ensuite, une bascule 24 de type JK, activée par les fronts descendants du signal d'horloge locale HL, dont l'entrée J est reliée à la sortie d'une porte logique «ET» 25 qui reçoit les signaux $\overline{AC}$ et $\overline{RFD}$, et dont l'entrée K est au niveau «0».

La sortie Q de la bascule 24 fournit un signal A1 qui, lorsqu'il passe à «1», indique l'arrivée du premier octet d'adresse qui est utilisé pour la commutation. Le signal A1 reste ensuite à «1» jusqu'à la remise à zéro par le signal RAZ, c'est-à-dire jusqu'à la fin du paquet.

Une bascule 26 de type D, activée par les fronts montants du signal HL, reçoit le signal A1 et fournit un signal VAL qui est simplement le signal A1 retardé. Elle est remise à zéro par le signal RAZ.

Le circuit 20 comporte, enfin, une bascule 27 de type D, activée par les fronts montants du signal HL, qui reçoit le signal VAL et fournit un signal A2 qui, lorsqu'il passe à «1», indique l'arrivée du second octet d'adresse qui devient le premier octet d'adresse du paquet qui sort de l'opérateur. Le signal A2 reste ensuite à «1» jusqu'à la remise à zéro par le signal RAZ.

On revient, maintenant, à la figure 5; le circuit de réception comporte deux registres l'un d'étiquette 31, l'autre de données 32.

Les entrées du registre 31 sont reliées aux 8 fils de données D et à la sortie d'un circuit 30 de contrôle de parité qui reçoit le signal P et les données. Le chargement de ce registre 31 est commandé par le signal A1 issu du circuit 20, ce qui permet de charger au bon moment l'étiquette à utiliser pour la commutation.

Les sorties de ce registre sont toutes reliées à un décodeur 33 qui est commandé par le signal VAL de validation d'adresse issu du circuit 20.

Dans le cas où le circuit 30 n'a pas détecté d'erreur, le détecteur prend en compte les huit premières entrées et adresse une seule et unique sortie, c'est-à-dire que l'une des sorties passe à «1».

Dans le cas contraire où une erreur a été détectée, le décodeur prend seulement en compte le fait que la neuvième entrée est à «1» et cela a pour conséquence de fournir en sortie AD l'adresse du niveau supérieur qui est chargé de traiter le paquet erroné.

Les entrées du registre 32 reçoivent les signaux de données D et le signal FP fe fin de paquet et le chargement de ce registre est commandé par le signal HL. Les sorties de ce registre sont toutes reliées à une première partie des entrées d'un aiguilleur 34 constitué par un ensemble de multiplexeurs. La sortie du registre 32 qui correspond au signal FP en entrée fournit le signal FPR de paquet retardée au circuit 20.

La seconde partie des entrées de l'aiguilleur 34 est reliée à une configuration câblée de début de paquet (huit fils portant la configuration de drapeau plus un neuvière au niveau logique bas).

L'aiguillage est réalisé par le signal A2, issu du circuit 20; quand A2 est à «0» on a en sortie les signaux présents à la première partie des entrées et quand A2 est à «1» on a en sortie les signaux présents à la seconde partie des entrées. En sortie du multiplexeur 34, on obtient un signal ND de données qui, par l'intermédiaire de l'étage d'émission, est transmis à l'opérateur suivant.

Ces signaux ND ne comportent que des informations utiles, c'est-à-dire, pour chaque paquet, un octet à configuration de drapeau, les adresses, les données et un autre octet à configuration de drapeau.

En plus de signaux AD et ND, le circuit de réception fournit à l'étage d'émission un signal DND indiquant un début de paquet au niveau des signaux ND. Ce signal DND est obtenu à la sortie d'une porte logique «ET» 35 qui reçoit en entrée le signal VAL et le signal A2 inversé par un inverseur 36.

En conclusion de cette première partie consacrée au circuit de réception, on précise les connexions entre un étage de réception à n circuits et un étage d'émission à n circuits du point de vue des fils de liaison. Dans chaque circuit de réception, chacune des n sorties AD du décodeur 33 est reliée à un circuit d'émission différent et les neuf sorties (ND) du multiplexeur 34 ainsi que la sortie (DND) de la porte «ET» 35 sont reliées chacune à tous les circuits d'émission.

Dans notre exemple particulier, entre un circuit de réception et un circuit d'émission il y a onze fils de liaison.

A la figure 8, on a représenté de façon détaillée un circuit d'émission qui comporte n entrées EE1 à EEn et une sortie SE.

Ce circuit comporte un ensemble 40 de n files d'attente FIFO1 à FIFOn, chaque file d'attente représentée étant constituée de neuf registres du type FIFO «first in, first out» (premier entré, premier sorti) en parallèle.

Chaque file d'attente FIFOi (i prenant les valeurs entières de 1 à n) reçoit des signaux NDi sur neuf fils en parallèle; elle reçoit également un signal Sli de décalage d'entrée qui est issu d'une porte logique «ET» 6i qui reçoit le signal HL et le signal ADi provenant du même circuit de réception que les signaux NDi, ce qui permet de ne faire pénétrer que des informations utiles dans la file d'attente. Elle reçoit enfin, un signal SOi de décalage de sortie.

La sortie de FIFOi est reliée à l'entrée d'une porte logique 4i à sortie trois états commandée par un signal OEi, cette porte 4i représentant neuf portes de ce type. Les sorties des premières portes sont reliées entre elles, de même pour les sorties des secondes portes et ainsi de suite jusqu'aux sorties des neuvièmes. Les neuf points communs, ainsi constitués, sont reliés à une partie des entrées d'un multiplexeur 70 dont l'autre partie des entrées est reliée à un code de repos câblé et dont les sorties sont reliées à un registre de recadrage 72. On désigne par FPS (fin de paquet: 1 fil) et DS (données: 8 fils) les signaux issus des points communs.

Le registre 72 reçoit également un signal de contrôle de parité formé par le circuit 71 à l'aide des signaux de données issus de 70. Ce registre 72 est commandé par le signal d'horloge HL et les signaux issus de ce registre 72 constituent les signaux de sortie SE du circuit d'émission qui sont transmis au rythme de HL à l'opérateur suivant.

Le circuit d'émission comprend, également, un circuit 50 d'établissement des priorités de sortie entre les n files d'attente.

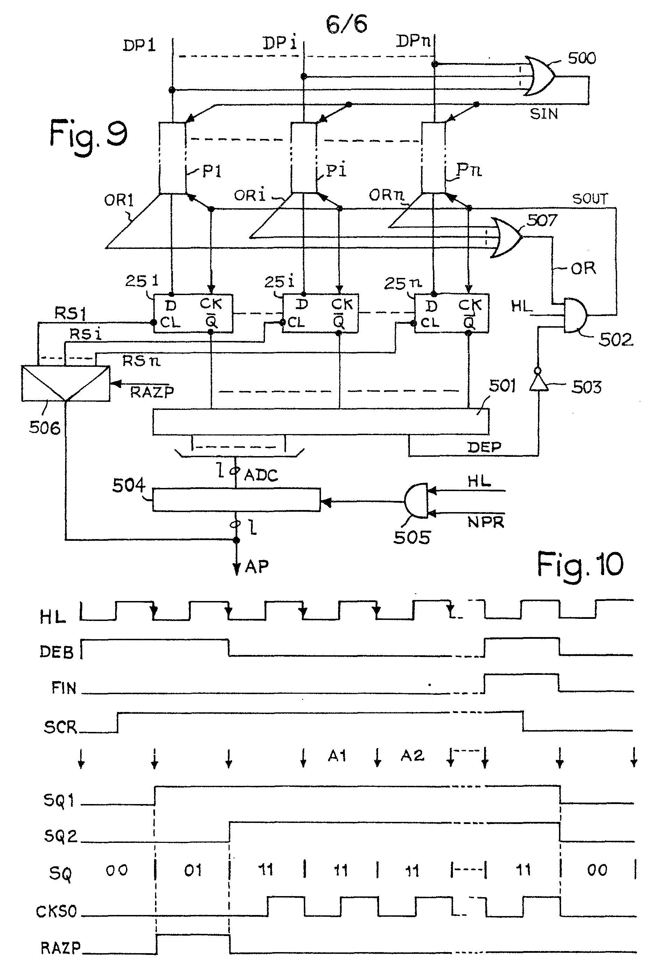

Ce circuit 50, représenté en détail à la figure 9, comporte n registres de mémorisation P1 à Pn du type «premier entré, premier sorti». Chaque registre Pi (i = 1 à n) reçoit un signal DPi issu d'une porte logique «ET» 5i qui reçoit elle-même le signal ADi d'adressage et le signal DNDi de début de paquet (voir figure 8). Quand le signal DPi est à «1», il indique donc l'arrivée d'un paquet dans la file d'attente FIFOi.

Les n registres Pi reçoivent un même signal SIN de décalage d'entrée qui provient d'une porte logique «OU» 500 qui reçoit les signaux DP1 à DPn. Ainsi, il y a décalage dans les registres P1 à Pn de priorité chaque fois qu'au moins un des signaux DPi (i = à n) est égal à «1», c'est-à-dire chaque fois qu'un début de paquet entre dans au moins une file d'attente.

La sortie de chaque registre Pi (i = 1 à n) est reliée à l'entrée D d'une bascule 25i de type D. Les n registres Pi reçoivent un même signal SOUT de décalage de sortie et les n bascules 25i (i = à n) reçoivent ce même signal SOUT en entrée CK d'horloge.

Chaque registre Pi fournit un signal ORi indiquant qu'un signal est prêt à sortir du registre. Une porte 507 effectue un «OU» logique entre les n signaux ORi et fournit un signal OR indiquant un signal prêt à sortir d'au moins un registre Pi.

Les sorties $\overline{Q}$ des bascules 25i sont reliées aux entrées d'un circuit 501 codeur de priorité. Lorsqu'il y a une seule entrée au niveau «O», le circuit 501 fournit en sortie l'adresse ADC codée en binaire de cette entrée. Lorsqu'il y a plusieurs entrées au niveau «O», le circuit 501 établit une priorité entre ces différentes entrées et il fournit en sortie ADC l'adresse codée en binaire de l'entrée prioritaire.

Le circuit 501 fournit également, un signal DEP de demande d'établissement de priorité qui est égal à «1» s'il y a au moins une entrée à «0», c'est-à-dire lorsqu'il y a encore une priorité à établir ou au moins une adresse à coder, et qui est égal à «0» si toutes les entrées sont à «1», c'est-à-dire lorsqu'il n'y a plus rien à décoder.

Une porte logique «ET» 502 reçoit le signal d'horloge HL, le signal OR et le signal $\overline{DEP}$ qui est le signal DEP inversé par la porte 503, et fournit le signal SOUT de telle sorte que, lorsque le codeur 501 n'a plus rien à coder, les registres Pi lui fournissent de nouveaux signaux d'entrée s'ils en contiennent, via les bascules 25i.

A la sortie du codeur 501, le signal ADC est mémorisé dans un registre 504 qui fournit en sortie le signal AP à la demande d'un signal de chargement issu d'une porte logique «ET» 505 qui reçoit le signal d'horloge HL et un signal NPR.

Les ε sorties du registre 504 sont reliées aux entrées d'un décodeur 506 dont les sorties, qui fournissent les signaux RSI à RSn, sont reliées respectivement aux entrées CL de remise à zéro des bascules 251 à 25n. Ce décodeur 506 est commandé par un signal RAZP de telle sorte que, lorsque le signal RAZP le permet, les signaux RSi (i = 1 à n) effectuent la remise à zéro sélective de la bascule 25i qui correspond à l'entrée du codeur dont l'adresse vient d'être codée.

Quand toutes les bascules ont leur sortie Q à zéro (donc leur sortie $\overline{Q}$ à «1») le signal DEP est égal à «0» et l'on passe à l'étape suivante.

Le circuit d'émission représenté à la figure 8 comporte, enfin, un circuit logique 80 de gestion d'émission des paquets.

Ce circuit 80 comporte deux décodeurs 81 et 82 qui reçoivent tous les deux le signal AP d'adresse prioritaire codée en binaire sur ε fils en parallèle. Le décodeur 81, commandé par un signal CKSO, fournit les signaux SO1 à SOn qui autorise la sortie d'un paquet d'une seule et unique file d'attente quand le signal CKSO le permet. Le décodeur 82 fournit, en permanence, les signaux OE1 à OEn dont un et un seul connecte la porte à sortie trois états qui correspond à la file d'attente sélectionnée.

Pour une meilleure compréhension, la figure 10 qui représente l'allure des signaux du circuit 80 est décrite en même temps que le circuit.

Le circuit 80 comprend un circuit de reconnaissance de la configuration de drapeau qui est relié aux huit fils de sortie de données DS du circuit 40 et qui comporte une porte logique «ET» 83 qui reçoit les signaux du premier fil inversés par une porte 84, les signaux du huitième fil inversés par une porte 85 et les signaux des six autres fils. Le signal DEB issu de la porte 83 est au niveau «1» quand il y a à l'entrée la configuration «01111110», c'est-à-dire en début et en fin de paquet (voir figure 10).

Le circuit 80 comporte ensuite une porte «ET» 86 qui reçoit le signal FPS issu du circuit 40 et le signal DEB et qui fournit un signal FIN égal à «1» en fin de paquet (voir figure 10).

Puis, on a une bascule 87 de type D, activée par les fronts montants du signal HL, dont l'entrée D est reliée à la sortie d'une porte logique «OU» 88 reliée aux sorties de deux portes logiques «ET» 89 et 90. La porte 89 reçoit le signal DEB et le signal FIN inversé par la porte 91; la porte 90 reçoit le signal $\overline{FIN}$ issu de la porte 91 et le signal SCR de sélection de code repos issu de la sortie Q de bascule 87.

Ce signal SCR, représenté à la figure 10, passe à «1» au début de chaque paquet et à «0» à la fin; il commande le multiplexeur 70 de façon à avoir en sortie de celui-ci des codes repos en l'absence de paquet à l'entrée.

La sortie $\overline{Q}$ de la bascule 87 fournit le signal NPR au circuit 50. A la fin de chaque paquet, ce signal NPR permet d'obtenir une nouvelle adresse prioritaire.

Le circuit 80 comporte, enfin, deux bascules 92 et 93 de type D activées par les fronts descendants du signal HL et qui reçoivent toutes les deux en entrée CL de remise à zéro le signal SCR.

La bascule 92 reçoit en entrée D le signal SCR et fournit en sortie un signal SQ1; la bascule 93 reçoit en entrée D le signal SQ1 et fournit le signal SQ2. Les signaux SQ1, SQ2 sont représentés à la figure 10. Le séquencement de sortie est réalisé par ces deux bascules et est représenté sur la figure 10 par SQ.

En l'absence de paquet, SQ est égal à 00 et en sortie SE, on transmet des codes repos.

Quand le circuit 50 fournit une adresse prioritaire AP elle est décodée immédiatement par le décodeur 82 et la porte à sortie trois états correspondante est connectée. Les signaux DS sont ceux qui sont en sortie de la file d'attente, c'est-à-dire que l'on a une configuration de drapeau qui est transmise en SE. L'apparition de cette configuration déclenche le fonctionnement du circuit 80; SCR passe à «1», puis SQ devient égal à 01.

Puis SQ2 passe à «1» et donc SQ est égal à 11. Ceci entraîne le décalage à la sortie de la file d'attente adressée grâce au signal CKSO de commande du décodeur 81 qui est issu d'une porte logique «ET» 94 qui reçoit les signaux SQ2 et HL. Ce signal permet de transmettre pendant une seconde période de HL la configuration de drapeau, puis toutes les adresses et données qui suivent jusqu'à la fin du paquet. On a ainsi reconstitué un paquet conforme au protocole de connexion.

Enfin, une porte logique «ET» 95, qui reçoit le signal SQ1 et l'inverse de SQ2, fournit le signal RAZP au décodeur 506 du circuit d'établissement de priorité 50. Quand SQ est égal à 01, RAZP est à «1» et permet la remise à zéro sélective par le décodeur 506.

L'opérateur, qui comporte un niveau de commutation semblable à celui décrit dans ce brevet, possède une vitesse de fonctionnement répondant aux exigences de la téléphonie, grâce, notamment, à la transmission des données en parallèle.

En outre, les files d'attente des circuits d'émission se remplissent uniquement d'informations utiles, c'est-à-dire par paquet: un code de début, les adresses, les données et un code de fin.

D'autre part cet opérateur est capable de relier n'importe quelle entrée à n'importe quelle sortie, il a donc une accessibilité totale.

Par ailleurs, l'étiquette utilisée par un opérateur est éliminée complètement avant émission vers l'opérateur suivant de telle sorte qu'un paquet qui ne sort pas du niveau de commutation des opérateurs diminue d'un octet à chaque nœud et finit par disparaître, ce qui préserve le réseau d'une éventuelle saturation par des paquets «perdus».

Enfin, si le contrôle de parité détecte un paquet erroné celui-ci est aiguillé immédiatement sur le niveau supérieur pour analyse.

**Revendications**

1. Opérateur (A, B, C, D) pour réseau de commutation de données numériques par paquets, comportant un niveau supérieur (NS) qui comprend un microcalculateur et une interface (1) vers l'extérieur du réseau et dont l'une des tâches est de former, à partir des informations reçues de l'extérieur du réseau, des paquets «autodirecteurs», c'est-à-dire aptes à transiter dans le réseau uniquement grâce à un en-tête placé au début du paquet et conformes au protocole de transmission utilisé dans le réseau, opérateur caractérisé en ce qu'il comporte également une interface (2) vers l'intérieur du réseau qui comprend n portes bidirectionnelles (PB1 à PBn) qui sont connectées à des interfaces (2) vers l'intérieur du réseau d'autres opérateurs du réseau et dont chacune se compose d'un circuit de réception (R1 à Rn) à une entrée (ER) et n sorties (SR1 à SRn) et d'un circuit d'émission (E1 à En) à n entrées (EE1 à EEn) et une sortie (SE), une entrée du circuit d'émission étant reliée à une sortie d'un circuit de réception différent pour chacune des n entrées, l'entrée de chaque circuit de réception d'une porte étant reliée à la sortie d'un circuit d'émission d'une porte d'un autre opérateur du réseau.

2. Opérateur pour réseau de commutation de données numériques par paquets selon la revendication 1, chaque opérateur du réseau possédant sa propre horloge et les signaux de ces horloges étant plésiochrones, caractérisé en ce que chaque circuit de réception (Ri) de chaque porte bidirectionnelle (PB2) comporte:
— des moyens (10) de synchronisation au niveau «horloges» pour recevoir les signaux de données au rythme de l'horloge incidente et fournir ces mêmes signaux au rythme de l'horloge locale, quand ils en ont l'autorisaton,
— des moyens (20) de synchronisation au niveau «paquets» pour discerner les différentes phases de la transmission d'un paquet et pour élaborer des signaux de commande des autres moyens du circuit de réception et, en particulier, fournir un signal d'autorisation aux moyens (10) de synchronisation au niveau «horloges»,
— des moyens (30) de contrôle de parité des signaux issus des moyens de synchronisation au niveau «horloges», pour permettre d'orienter les paquets en faute vers le niveau supérieur (NS),
— des moyens (31, 33) de traitement de l'étiquette pour sélectionner et décoder la partie de l'en-tête qui correspond à l'opérateur concerné et qui est appelée étiquette, à l'aide de signaux fournis par les moyens (20) de synchronisation au niveau «paquets»,
— des moyens (32, 34, 35, 36) de traitement des données pour reconstituer le paquet à transmettre après élimination de l'étiquette utilisée et pour fournir un signal d'indication de début de paquet reconstitué, à l'aide de signaux issus des moyens (20) de synchronisation au niveau «paquets».

3. Opérateur pour réseau de commutation de données numériques par paquets selon la revendication 2, les données (DI) étant transmises sur m fils en parallèle dans le réseau avec en plus un fil (PI) pour un contrôle de parité et un autre pour une indication de fin de paquet (FPI), caractérisé en ce que les moyens (10) de synchronisation au niveau «horloges» consistent en:

— deux registres (11, 12) de mémorisation intermédiaire des données comportant m + 2 éléments binaires, qui sont commandés par des signaux (C1, C2) tels que lorsque l'on écrit dans l'un, on lit dans l'autre et inversement, les sorties de chacun des registres étant reliées aux entrées d'un multiplexeur de sortie (13),

— un circuit logique d'écriture alternée (14) commun aux deux registres et constituée principalement par une bascule de type JK (140),

— un circuit logique de lecture (15) qui comporte une logique de correction de déphasage constituée par une bascule de type D (151) de mémorisation de demande de correction dont l'entrée d'horloge est connectée à l'horloge locale et dont l'entrée D est reliée à la sortie d'une porte logique «NON OU EXCLUSIF» (152) dont l'une des entrées est reliée à la sortie Q de la bascule JK (140) du circuit d'écriture et l'autre à la sortie d'une bascule de type JK d'adressage en lecture (150), dont les entrées sont au niveau «1» et dont l'entrée d'horloge est reliée à la sortie d'une porte logique «ET» (153) dont l'une des entrées est connectée à l'horloge locale et l'autre à la sortie d'une porte logique «NON-ET» (154) qui reçoit d'une part le signal de demande de correction (SD) issu de la bascule D (151) et d'autre part un signal d'autorisation de correction (AC).

4. Opérateur pour réseau de commutation de données numériques par paquets selon la revendication 2, caractérisé en ce que les moyens (20) de synchronisation au niveau «paquets» comportent:

— un circuit logique (21) de reconnaissance de la configuration de drapeau suivi par,

— un circuit de détection de présence d'un paquet qui est constitué par une première bascule (22) de type JK, dont l'entrée J est reliée à la sortie (RFD) du circuit (21) de reconnaissance de la configuration de drapeau et dont l'entrée K est au niveau logique bas désigné par «0», la sortie $\overline{Q}$ de cette première bascule fournissant le signal d'autorisation de correction (AC),

— un circuit de détection du premier mot d'adresse qui comporte une seconde bascule (24) de type JK dont l'entrée K est au niveau logique «0» et dont l'entrée J est reliée à la sortie d'une porte logique «ET» (25) elle-même reliée à la sortie Q de la première bascule (22) de type JK et à la sortie d'un inverseur (213) qui reçoit le signal issu du circuit logique (21) de reconnaissance de la configuration de drapeau, la sortie Q de la deuxième bascule (24) fournit un signal (A1) indiquant l'apparition du premier mot d'adresse,

— un circuit de validation d'adresse qui comporte une première bascule (26) de type D, activée par les fronts montants du signal HL, dont l'entrée D est reliée à la sortie Q de la seconde bascule (24) de type JK et qui fournit en sortie un signal (VAL) de validation d'adresse,

— un circuit de détection du second mot d'adresse qui comporte une seconde bascule de type D (27), activée par les fronts montants du signal HL, dont l'entrée D est reliée à la sortie Q de la première bascule (26) de type D et qui fournit en sortie un signal (A2) d'indication de détection du second mot d'adresse,

— un circuit de remise à zéro qui comporte une troisième bascule (23) de type D, activée par les fronts descendants du signal d'horloge locale (HL), dont l'entrée reçoit un signal (FPR) de fin de paquet retardée et dont la sortie $\overline{Q}$ est reliée aux entrées de remise à zéro des deux bascules de type JK (22, 24) et des deux bascules de type D (26, 27),

5. Opérateur pour réseau de commutation de données numériques par paquets selon les revendications 2, 3 et 4, caractérisé en ce que les moyens de traitement d'étiquette consistent en un registre d'adresse (31) comportant m + 1 éléments binaires, m pour les données numériques (D) plus un pour le contrôle de parité (P), registre dont les entrées sont connectées aux sorties correspondantes (D, P) du circuit (10) de synchronisation au niveau «horloges», dont l'entrée de chargement «LOAD» reçoit le signal (A1) de détection du premier mot d'adresse et l'entrée «CLEAR» le signal de remise à zéro (RAZ), et dont les sorties sont reliées aux entrées d'un décodeur (33) qui est commandé par le signal de validation d'adresse (VAL).

6. Opérateur pour réseau de commutation de données numériques par paquets selon les revendications 2, 3 et 4, caractérisé en ce que les moyens de traitement des données consistent en un registre de données (32) comportant m + 1 éléments binaires, m pour les données numériques (D) plus un pour le signal de fin de paquet (FP), les entrées de ce registre étant connectées aux sorties correspondantes du circuit (10) de synchronisation au niveau «horloges» et les sorties de ce registre étant reliées à une partie des entrées d'un multiplexeur (34) qui reçoit sur ses autres entrées un signal de drapeau câblé et qui est commandé par le signal (A2) de détection du secon mot d'adresse, ce multiplexeur (34) fournissant le paquet reconstitué (ND) sur m + 1 sorties en parallèle.

7. Opérateur pour réseau de commutation de données numériques par paquets selon la revendication 1 ou la revendication 2, caractérisé en ce que chaque circuit d'émission (Ei) de chaque porte bidirectionnelle comporte:

— des moyens (40) de stockage pour former n files d'attente avec les signaux reçus de l'étage de réception,

— des moyens (50) d'établissement de priorité pour noter l'ordre d'arrivée des paquets à partir des signaux reçus de l'étage de réception, pour établir une priorité en cas d'arrivées simultanées de deux ou plusieurs paquets et pour fournir une adresse codée de la file d'attente à traiter en priorité,

— des moyens (70, 71, 72) d'émission pour reconstituer, à partir des signaux issus des moyens de stockage, des paquets conformes au protocole de connexion et pour les émettre au rythme de l'horloge locale dans leur ordre d'arrivée,

– des moyens (80) de gestion pour sélectionner une file d'attente à partir de l'adresse codée fournie par les moyens d'établissement de priorité (50), pour demander une nouvelle adresse prioritaire à traiter à partir des informations issues des moyens de stockage (40) et pour commander les moyens d'émission (70, 71, 72).

8. Opérateur pour réseau de commutation de données numériques par paquets selon les revendications 6 et 7, caractérisé:

– en ce que les moyens de stockage (40) sont constitués par n files d'attente (FIFOi) qui comportent chacune m + 1 registres de type «FIFO» en parallèle,

– en ce que, pour chaque file d'attente, les m + 1 entrées des registres sont reliées aux sorties (ND) du multiplexeur de sortie (34) du registre de données (32) d'un circuit de réception (Ri) différent pour chacune des n files d'attente (FIFOi), et l'entrée de décalage d'entrée (SIi) est reliée à la sortie d'une porte logique «ET» (6i) elle-même reliée à l'horloge locale (HL) et à la sortie du décodeur d'adresse (33) du circuit de réception (Ri) qui correspond à cette file,

– et en ce que, pour chaque file d'attente, les m + 1 sorties sont reliées à un ensemble de m + 1 portes à sortie «trois états» (4i) commandées par un même signal provenant des moyens de gestion (80), les sorties des premières portes à sortie «trois états» (4i) de chaque ensemble étant reliées entre elles, de même pour les sorties des deuxièmes et ainsi de suite jusqu'aux sorties des m + 1 ième, et ces m + 1 points communs étant connectés à m + 1 entrées d'un multiplexeur de sortie (70) qui fait partie des moyens d'émission, qui reçoit sur m + 1 autres entrées un code repos câblé et qui est commandé par un signal de sélection (SCR) provenant des moyens de gestion (80).

9. Opérateur pour réseau de commutation de données numériques par paquets selon la revendication 8, caractérisé en ce que les moyens (50) d'établissement de priorité comportent:

– n registres de priorité de type «FIFO» (Pi) qui sont affectés chacun à une file d'attente (FIFOi) et qui reçoivent chacun en entrée un signal (DPi), indiquant un début de paquet dans la file correspondante, issu d'une porte logique «ET» (5i) qui reçoit le signal (DND) de début de paquet reconstitué provenant des moyens de synchronisation au niveau «paquets» (20) du circuit de réception (Ri) d'où proviennent les données (ND) qui se trouvent en entrée de la file (FIFOi) concernée, et le signal d'adressage (AD) issu de la sortie, correspondant à cette même file (FIFOi), du décodeur d'étiquette (33) de ce même circuit de réception (Ri), les sorties de ces n portes «ET» (Si) étant reliées à une porte «OU» (500) dont la sortie est reliée aux entrées de décalage d'entrée des n registres de priorité (Pi),

– n bascules de type D (25i) ayant chacune leur entrée D reliée à la sortie de l'un des n registres de priorité (Pi),

– un circuit codeur de priorité (501) dont les entrées sont reliées aux sorties $\bar{Q}$ des bascules de type D (25i) et dont une sortie (DEP), indiquant la présence d'informations à coder en entrée, est reliée par l'intermédiaire d'un inverseur (503) à une porte «ET» (502), cette porte «ET» (502) étant également reliée à l'horloge locale et à la sortie d'une porte «OU» (507) connectée aux n sorties (ORi) d'indication d'informations prêtes à sortir des registres de priorité (Pi) et ayant sa sortie reliée d'une part aux n entrées de décalage de sortie des n registres de priorité (Pi), d'autre part aux n entrées d'horloge des n bascules D (25i),

– un registre (504) de mémorisation intermédiaire à ε éléments binaires dont les entrées sont reliées au codeur de priorité (501) et dont l'entrée de chargement est connectée à la sortie d'une porte «ET» (505) qui reçoit en entrée le signal d'horloge locale (HL) et un signal (NPR) de demande d'une nouvelle adresse codée prioritaire provenant des moyens de gestion (80), la sortie de ce registre (504) fournissant une adresse codée prioritaire (AP),

– et un décodeur (506) dont les entrées sont reliées aux ε sorties du registre de mémorisation intermédiaire (504) et dont chacune des n sorties est reliée à l'entrée de remise à zéro de l'une des bascules de type D (25i), ce décodeur étant commandé par un signal (RAZP) de remise à zéro de l'entrée prioritaire déjà traitée, signal qui provient des moyens de gestion (80).

10. Opérateur pour réseau de commutation de données numériques par paquets selon la revendication 9, caractérisé en ce que les moyens de gestion (80) comportent:

– deux décodeurs (81, 82) dont les entrées sont reliées aux ε sorties du registre (504) de mémorisation intermédiaire des moyens d'établissement de priorité, les n sorties du premier décodeur (81) étant reliées aux n entrées de décalage de sortie (SOi) des n files d'attente (FIFOi) des moyens de stockage et les n sorties du second décodeur (82) étant reliées aux n entrées de commande des n portes à sortie trois états (4i) de ces mêmes moyens de stockage,

– un circuit (83, 84, 85, 86, 87, 88, 89, 90, 91) de reconnaissance de début et fin de paquet à la sortie des moyens de stockage qui fournit le signal (SCR) de sélection de multiplexeur (70) de sortie des moyens d'émission, qui sélectionne le code repos câblé en l'absence de paquet, et qui fournit l'inverse de ce signal de sélection comme signal (NPR) de demande d'une nouvelle adresse codée prioritaire,

– un circuit de séquencement constitué par des bascules de type D (92, 93), activées par les fronts descendants du signal d'horloge locale (HL), dont les entrées de remise à zéro (CL) ainsi que l'entrée D de la première (92) reçoivent le signal de sélection (SCR) issu du circuit précédent, la sortie Q de la première bascule (92) étant reliée à l'entrée de la seconde bascule (93), la sortie Q de la première bascule et la sortie $\bar{Q}$ de la seconde bascule étant reliées aux entrées d'une première porte logique «ET» (95) dont la sortie est reliée à l'entrée de commande du décodeur (506) du circuit (50) d'établissement de priorité, et la sortie Q de la seconde bascule ainsi que l'horloge locale étant reliées aux entrées d'une seconde porte logique «ET» (94) dont la sortie est reliée à l'entrée de commande du premier décodeur (81).

11. Opérateur pour réseau de commutation de données numériques par paquets selon la revendication 1, relié à p autres opérateurs du réseau, caractérisé en ce que l'interface (2) vers l'intérieur du réseau comporte p portes bidirectionnelles (PBi) se composant chacune d'un circuit de réception (Ri) à une entrée et p + 1 sorties et d'un circuit d'émission (Ei) à p + 1 entrées et une sortie, l'une des sorties de chaquecircuit de réception (R₁) et l'une des entrées de chaque circuit d'emission (Ei) étant reliées au niveau supérieur (NS).

12. Opérateur (A, B, C, D) pour réseau de commutation de données numériques par paquets, comportant un niveau supérieur (NS) qui comprend un microcalculateur et une interface (1) vers l'extérieur du réseau et dont l'une des tâches est de former, à partir des informations reçues de l'extérieur du réseau, des paquets autodirecteurs, c'est-à-dire aptes à transiter dans le réseau uniquement grâce à un en-tête placé au début du paquet et conformes au protocole de transmission utilisé dans le réseau, opérateur caractérisé en ce qu'il comporte également une interface (2) vers l'intérieur du réseau qui comprend p + 1 portes bidirectionnelles (1 à p + 1) dont chacune se compose d'un circuit de réception (Ri) à une entrée (ER) et à p + 1 sorties et d'un circuit d'émission (Ei) à p + 1 entrées (EEi) et une sortie (SE), une entrée du circuit d'émission étant reliée à une sortie d'un circuit de réception différent pour chacune des p + 1 entrées, l'une des portes bidirectionnelles ayant son entrée (ER) et sa sortie (SE) reliée au niveau supérieur (NS), l'entrée de chaque circuit de réception Ri des p autres portes bidirectionnelles (PBi) étant reliée à la sortie d'un circuit d'émission (Ei) d'une porte (PBi) d'un autre opérateur du réseau.

**Patentansprüche**

1. Wähler (A, B, C, D) für ein mit Digitaldatenpaketen arbeitendes Koppelnetz, mit einem oberen Niveau (NS), das einen Mikrocomputer und eine Schnittstelle (1) zur Aussenseite des Netzes umfasst und dessen eine Aufgabe darin besteht, aus den von der Aussenseite des Netzes empfangenen Informationen «selbstlenkende» Pakete herzustellen, d.h. solche, die geeignet sind, in dem Netz allein mittels einer dem Anfang jedes Paketes vorangestellten Titelgruppe fortzuschreiten, und die mit dem in dem Netz verwendeten Übertragungsprotokoll übereinstimmen, dadurch gekennzeichnet, dass er ferner eine Schnittstelle (2) zum Anschluss an das Innere des Netzes umfasst, welche n bidirektionale Tore (PB1 bis PBn) umfassen, die mit den zur Innenseite des Netztes anschliessenden Schnittstellen (2) anderer Wähler des Netzes verbunden sind, und wovon jedes zusammengesetzt ist aus einer Empfangsschaltung (R1 bis Rn) mit einem Eingang (ER) und n Ausgängen (SR1 bis SRn) und aus einer Sendeschaltung (E1 bis En) mit n Eingängen (EE1 bis EEn) und einem Ausgang (SE), wobei ein Eingang der Sendeschaltung mit einem Ausgang einer Empfangsschaltung verbunden ist, die für jeden der n Eingänge verschieden ist, und wobei der Eingang jeder Empfangsschaltung eines Tores mit dem Ausgang einer Sendeschaltung eines Tores eines anderen Wählers des Netzes verbunden ist.

2. Wähler für ein mit Digitaldatenpaketen arbeitendes Koppelnetz nach Anspruch 1, wobei jeder Wähler des Netzes seinen eigenen Taktgeber aufweist und die Signale dieser Taktgeber pelsiochron sind, dadurch gekennzeichnet, dass jede Empfangsschaltung (Ri) jedes bidirektionalen Tores (PB2) umfasst:
— Synchronisationsmittel (10) zum Synchronisieren auf «Taktgeberniveau» für den Empfang der Datensignale im Rhythmus des ankommenden Taktes und zum Abgeben dieser selben Signale im Rhythmus der örtlichen Taktgebers, wenn sie dazu berechtigt sind,
—Synchronisationsmittel (20) zum Synchronisieren auf «Paketniveau» zur Unterscheidung der verschiedenen Übertragungsphasen eines Paketes und zur Erzeugung von Steuersignalen für die anderen Einrichtungen der Empfangsschaltung, und insbesondere zur Abgabe eines Berechtigungssignals an die Synchronisationsmittel (10) zum Synchronisieren auf dem «Taktgeberniveau»,
— Paritätskontrollmittel (30) für die von den «Taktgeberniveau»-Synchronisationsmitteln abgegebenen Signale, um es zu ermöglichen, fehlerhafte Pakete zu dem oberen Niveau (NS) zu orientieren,
— Verarbeitungsmittel (31, 33) zur Verarbeitung der Marke für die Selektion und Decodierung desjenigen Teils der Titelgruppe, welcher dem betroffenen Wähler entspricht und als Marke bezeichnet wird, mit Hilfe von Signalen, die von den «Paketniveau»-Synchronisationsmitteln (20) geliefert werden,
— Datenverarbeitungsmittel (32, 34, 35, 36) zur Wiederherstellung des zu übertragenden Paketes nach Unterdrückung der verwendeten Marke und zur Abgabe eines den Anfang eines wiederhergestellten Paketes bezeichnenden Signals mit Hilfe von Signalen, die von den «Paketniveau»-Synchronisationsmitteln (20) abgegeben werden.

3. Wähler für ein mit Digitaldatenpaketen arbeitendes Koppelnetz nach Anspruch 2, bei welchem die Daten (DI) auf m Drähten parallel in dem Netz übertragen werden, mit einem zusätzlichen Draht (PI) für die Paritätskontrolle und einem weiteren zur Anzeige eines Paketendes (FPI), dadurch gekennzeichnet, dass die «Taktgeberniveau»-Synchronisationsmittel (10) bestehen aus:
— zwei Registern (11, 12) zur Zwischenspeicherung von Daten, mit m + 2 Binärelementen, und die durch Signale (C1, C2) derart gesteuert sind, dass beim Einschreiben in das eine in dem anderen ausgelesen wird, und umgekehrt, wobei die Ausgänge jedes Registers mit den Eingängen eines Ausgangsmultiplexers (13) verbunden sind,
— einer Logikschaltung (14) zum abwechselnden Einschreiben, die den zwei Registern gemeinsam ist und im wesentlichen aus einer JK-Kippschaltung (140) besteht,

– einer logischen Leseschaltung (15), die eine logische Phasenkorrekturschaltung umfasst, welche gebildet ist aus einer D-Kippschaltung (151) zum Speichern einer Korrekturaufforderung, deren Takteingang mit dem örtlichen Taktgeber verbunden ist und deren D-Eingang mit dem Ausgang einer logischen Exklusiv-NOR-Schaltung (152) verbunden ist, deren einer Eingang mit dem Q-Ausgang der JK-Kippschaltung (140) der Schreibschaltung verbunden ist und deren anderer Eingang mit dem Ausgang einer JK-Kippschaltung (150) zur Leseadressierung verbunden ist, deren Eingänge den Pegel «1» aufweisen und deren Takteingang mit dem Ausgang einer logischen AND-Schaltung (153) verbunden ist, deren einer Eingang mit dem örtlichen Taktgeber und deren anderer Eingang mit dem Ausgang einer logischen NAND-Schaltung (154) verbunden ist, die zum einen das von der D-Kippschaltung (151) abgegebene Korrekturaufforderungssignal (SD) und zum anderen ein Korrekturfreigabesignal (AC) empfängt.

4. Wähler für ein mit Digitaldatenpaketen arbeitendes Koppelnetz nach Anspruch 2, dadurch gekennzeichnet, dass die «Paketniveau»-Synchronisationsmittel (20) umfassen:

– eine Logikschaltung (21) zum Erkennen der Flagkonfiguration, gefolgt von

– einer Detektionsschaltung zum Feststellen der Anwesenheit eines Paketes, die gebildet ist aus einer ersten JK-Kippschaltung (22), deren J-Eingang mit dem Ausgang (RFD) der Flagkonfiguration-Erkennungsschaltung (21) verbunden ist und deren K-Eingang auf dem niedrigen Logikpegel «0» liegt, wobei der Q̄-Ausgang dieser ersten Kippschaltung das Korrekturfreigabesignal (AC) abgibt,

– einer Detektionsschaltung zur Feststellung des ersten Adresswortes, mit einer zweiten JK-Kippschaltung (24), deren K-Eingang auf Logikpegel «0» liegt und deren J-Eingang mit dem Ausgang einer logischen AND-Schaltung (25) verbunden ist, die ihrerseits mit dem Q-Ausgang der ersten JK-Kippschaltung (22) und mit dem Ausgang eines Inverters (213) verbunden ist, der das von der Flagkonfiguration-Erkennungsschaltung (21) abgegebene Signal empfängt, wobei der Q-Ausgang der zweiten Kippschaltung (24) ein Signal (A1) abgibt, welches das Erscheinen des ersten Adresswortes anzeigt,

– einer Adressfreigabeschaltung, die eine erste D-Kippschaltung (26) umfasst, welche durch die Anstiegsflanken des Signals HL aktiviert wird und deren D-Eingang mit dem Q-Ausgang der zweiten JK-Kippschaltung (24) verbunden ist und welche ausgangsseitig ein Adressfreigabesignal (VAL) abgibt,

– einer Detektionsschaltung zur Feststellung des zweiten Adresswortes, mit einer zweiten D-Kippschaltung (27), welche durch die Anstiegsflanken des Signals HL aktiviert wird, deren D-Eingang mit dem Q-Ausgang der ersten D-Kippschaltung (26) verbunden ist und die ausgangsseitig ein Signal (A2) abgibt, das die Feststellung des zweiten Adresswortes anzeigt,

– einer Nullrücksetzschaltung, die eine dritte D-Kippschaltung (23) umfasst, durch die Abfallflanken des örtlichen Taktsignals (HL) aktiviert wird, deren Eingang ein verzögertes Paketendesignal (FPR) empfängt und deren Ausgang Q̄ mit den Nullrücksetzeingängen der zwei JK-Kippschaltungen (22, 24) und der zwei D-Kippschaltungen (26, 27) verbunden ist.

5. Wähler für ein mit Digitaldatenpaketen arbeitendes Koppelnetz nach den Ansprüchen 2, 3 und 4, dadurch gekennzeichnet, dass die Marken-Verarbeitungsmittel aus einem Adressregister (31) bestehen, welches m + 1 Binärelemente umfasst, m für die Digitaldaten (D) plus eines für die Paritätskontrolle (P), wobei die Eingänge des Registers mit den entsprechenden Ausgängen (D, P) der «Taktgeberniveau»-Synchronisationsschaltung (10) verbunden sind, der Ladeeingang «LOAD» des Registers das Signal (A1) für die Feststellung des ersten Adresswortes empfängt und der Löscheingang «CLEAR» des Registers das Nullrücksetzsignal (RAZ) empfängt, während seine Ausgänge mit den Eingängen eines Decoders (33) verbunden sind, der durch das Adressfreigabesignal (VAL) gesteuert ist.

6. Wähler für ein mit Digitaldatenpaketen arbeitendes Koppelnetz nach den Ansprüchen 2, 3 und 4, dadurch gekennzeichnet, dass die Datenverarbeitungsmittel aus einem Datenregister (32) bestehen, das m + 1 Binärelemente umfasst, m für die Digitaldaten (D) und eines für das Paketendesignal (FP), wobei die Eingänge dieses Registers mit den entsprechenden Ausgängen der «Taktgeberniveau»-Synchronisationsschaltung (10) und die Ausgänge dieses Registers mit einem Teil der Eingänge eines Multiplexers (34) verbunden sind, der an seinen anderen Eingängen ein verdrahtetes Flagsignal empfängt und durch das die Feststellung des zweiten Adresswortes anzeigende Signal (A2) gesteuert ist, wobei dieser Multiplexer (34) das wiederhergestellte Paket (ND) an seinen m + 1 Ausgängen parallel abgibt.

7. Wähler für ein mit Digitaldatenpaketen arbeitendes Koppelnetz nach Anspruch 1 oder 2, dadurch gekennzeichnet, dass jede Sendeschaltung (Ei) jedes bidirektionalen Tores umfasst:

– Speichermittel (40) zur Bildung von n Warteschlangen aus den von der Empfangsstufe empfangenen Signalen,

– Vorrangbestimmungsmittel (50) zum Vermerken der Reihenfolge der Ankunft von Paketen ausgehend von Signalen, die in der Empfangsstufe empfangen werden, zur Festlegung eines Vorrangs bei gleichzeitiger Ankunft von zwei oder mehr Paketen und zur Erteilung einer codierten Adresse der mit Vorrang zu bearbeitenden Warteschlange,

– Sendemittel (70, 71, 72) zur Wiederherstellung der dem Verbindungsprotokoll entsprechenden Pakete ausgehend von Signalen, die von den Speichermitteln abgegeben werden, und zum Aussenden derselben im Rhythmus des örtlichen Taktgebers in der Reihenfolge ihrer Ankunft,

– Verwaltungsmittel (80) zum Auswählen einer Warteschlange aufgrund der codierten Adresse, die von den Vorrangbestimmungsmitteln (50) geliefert wird, zum Anfordern einer neuen bevorrechtigten zu verarbeitenden Adresse ausgehend von den Informationen, die von den Speichermitteln (40) abgegeben werden, und zum Steuern der Sendemittel (70, 71, 72).

8. Wähler für ein mit Digitaldatenpaketen arbeitendes Koppelnetz nach den Ansprüchen 6 und 7, dadurch gekennzeichnet, dass:

– die Speichermittel (40) aus n Warteschlangen (FIFOi) gebildet sind, die jeweils m + 1 parallele Register vom Typ «FIFO» umfassen,

– für jede Warteschlange die m + 1 Eingänge der Register mit den Ausgängen (ND) des Ausgangsmultiplexers (34) des Datenregisters (32) einer für jede der n Warteschlangen (FIFOi) verschiedenen Empfangsschaltungen (Ri) verbunden sind und der Verschiebeeingang (SIi) mit dem Ausgang einer AND-Logikschaltung (6i) verbunden ist, die ihrerseits mit dem örtlichen Taktgeber (HL) und mit dem Ausgang des Adressendecoders (33) der dieser Warteschlange entsprechenden Empfangsschaltung (Ri) verbunden ist,

– und dass für jede Warteschlange die m + 1 Ausgänge mit einer Gruppe von m + 1 Toren (4i) mit Tri-State-Ausgang verbunden sind, welche durch dasselbe Signal aus den Verwaltungsmitteln (80) gesteuert sind, wobei die Ausgänge der ersten Tore (4i) mit Tri-State-Ausgang in jeder Gruppe untereinander verbunden sind, ebenso wie die Ausgänge der zweiten usw. bis zu den Ausgängen des m + 1-ten Tores, wobei diese m + 1 gemeinsamen Punkte mit m + 1 Eingängen eines Ausgangsmultiplexers (70) verbunden sind, der Bestandteil der Sendemittel ist und an m + 1 anderen Eingängen einen verdrahteten Ruhecode empfängt und durch ein Selektionssignal (SCR) aus den Verwaltungsmitteln (80) gesteuert ist.

9. Wähler für ein mit Digitaldatenpaketen arbeitendes Koppelnetz nach Anspruch 8, dadurch gekennzeichnet, dass die Vorrangsbestimmungsmittel (50) umfassen:

– n Prioritätsregister (Pi) vom Typ «FIFO», die jeweils einer Warteschlange (FIFOi) zugewiesen sind und jeweils eingangsseitig ein Signal (DPi) empfangen, das den Anfang eines Paketes in der entsprechenden Warteschlange angibt und von einer AND-Logikschaltung (5i) abgegeben wird, welche das den Beginn eines wiederhergestellten Paketes angebende Signal (DND) empfängt, welches aus den «Paketniveau»-Synchronisationsmitteln (20) der Empfangsschaltung (Ri) stammt, aus welcher diejenigen Daten (ND) stammen, die sich am Anfang der betreffenden Warteschlange (FIFOi) befinden, und das Adresssignal (AD) empfängt, das von dem Ausgang des dieser selben Warteschlange (FIFOi) entsprechenden Markendecoders (33) dieser selben Empfangsschaltung (Ri) abgegeben wird, wobei die Ausgänge dieser n AND-Schaltungen (Si) mit einer OR-Schaltung (500) verbunden sind, deren Ausgang mit den Eingabe-Verschiebeeingängen der n Prioritätsregister (Pi) verbunden ist,

– nD-Kippschaltungen (25i), die jeweils mit ihrem D-Eingang an den Ausgang eines der n Prioritätsregister (Pi) angeschlossen sind,

– eine Vorrang-Codierschaltung (501), deren Eingänge mit den $\overline{Q}$-Ausgängen der der D-Kippschaltungen (25i) verbunden und wovon ein Ausgang (DEP), der das Vorhandensein von zu codierenden Informationen am Eingang anzeigt, über einen Inverter (503) mit einer AND-Schaltung (502) verbunden ist, wobei diese AND-Schaltung (502) ferner mit dem örtlichen Taktgeber und mit dem Ausgang einer OR-Schaltung (507) verbunden ist, welche mit den n Ausgängen (ORi) verbunden ist, die anzeigen, dass Informationen zum Austreten aus den Prioritätsregistern (Pi) bereitstehen, und welche an ihrem Ausgang einerseits mit n Ausgangsverschiebeeingängen der n Prioritätsregister (Pi) und andererseits mit den n Taktgebereingängen der nD-Kippschaltungen (25i) verbunden ist,

– ein Zwischenspeicherregister (504), mit l Binärelementen, deren Eingänge mit dem Vorrangcodierer (501) verbunden sind und wovon ein Ladeeingang mit dem Ausgang einer AND-Schaltung (505) verbunden ist, die eingangsseitig das örtliche Taktgebersignal (HL) und ein Signal (NPR) empfängt, welches eine neue codierte Vorrangadresse aus den Verwaltungsmitteln (80) abfragt, wobei der Ausgang dieses Registers (504) eine codierte Vorrangadresse (AP) liefert,

– und einen Decoder (506), dessen Eingänge mit den l Ausgängen des Zwischenspeicherregisters (504) verbunden sind und bei welchem jeder der n Ausgänge mit einem Nullrücksetzeingang einer der D-Kippschaltungen (25i) verbunden ist, wobei dieser Decoder durch ein aus den Verwaltungsmitteln (80) stammendes Nullrücksetzsignal (RAZP) der bereits behandelten Prioritätseingabe gesteuert ist.

10. Wähler für ein mit Digitaldatenpaketen arbeitendes Koppelnetz nach Anspruch 9, dadurch gekennzeichnet, dass die Verwaltungsmittel (80) umfassen:

– zwei Decoder (81, 82), deren Eingänge mit den l Ausgängen des Zwischenspeicherregisters (504) der Vorrangbestimmungsmittel verbunden sind, wobei die n Ausgänge des ersten Decoders (81) mit den n Ausgabeverschiebeeingängen (SOi) der n Warteschlangen (FIFOi) der Speichermittel und die n Ausgänge des zweiten Decoders (82) mit den n Steuereingängen der n Tore (4i) mit Tri-State-Ausgang dieser selben Speichermittel verbunden sind,

– eine Erkennungsschaltung (83, 84, 85, 86, 87, 88, 89, 90, 91) zum Erkennen des Anfangs und des Endes eines Paketes beim Verlassen der Speichermittel, welche das Selektionssignal (SCR) des Ausgangsmultiplexers (70) der Sendemittel liefert, welche bei Abwesenheit von Paketen den verdrahteten Ruhecode wählt und welche das invertierte Selektionssignal als Signal (NPR) zum Abrufen einer neuen codierten Vorrangadresse liefert,

– eine Ablaufsteuerschaltung, die aus D-Kippschaltungen (92, 93) gebildet ist, welche durch die Abfallflanken des örtlichen Taktgebers (HL) aktiviert werden, deren Nullrücksetzeingänge (CL) ebenso wie der D-Eingang der ersten Kippschaltung (92) das von der vorausgehenden Schaltung abgegebene Selektionssignal (SCR) empfangen, wobei der Q-Ausgang der ersten Kippschaltung (92) mit dem Eingang der zweiten Kippschaltung (93) verbunden ist, der Q-Ausgang der ersten Kippschaltung und der Q̄-Ausgang der zweiten Kippschaltung mit den Eingängen einer ersten AND-Logikschaltung (95) verbunden sind, deren Ausgang mit dem Steuereingang des Decoders (506) der Vorrangbestimmungsschaltung (50) verbunden ist, während der Q-Ausgang der zweiten Kippschaltung sowie der örtliche Taktgeber mit den Eingängen einer zweiten AND-Logikschaltung (94) verbunden sind, deren Ausgang mit dem Steuereingang des ersten Decoders (81) verbunden ist.

11. Wähler für ein mit Digitaldatenpaketen arbeitendes Koppelnetz nach Anspruch 1, welcher mit p weiteren Wählern des Netzes verbunden ist, dadurch gekennzeichnet, dass die an das Innere des Netzes anschliessende Schnittstelle (2) p bidirektionale Tore (PBi) umfasst, die jweils zusammengesetzt sind aus einer Empfangsschaltung (Ri) mit einem Eingang und p + 1 Ausgängen sowie aus einer Sendeschaltung (Ei) mit p + 1 Eingängen und einem Ausgang, wobei einer der Ausgänge jeder Empfangsschaltung (Ri) und einer der Eingänge jeder Sendeschaltung (Ei) mit dem oberen Niveau (NS) verbunden sind.

12. Wähler (A, B, C, D) für ein mit Digitaldatenpaketen arbeitendes Koppelnetz, welcher ein oberes Niveau (NS) aufweist, das einen Mikrocomputer und eine an die Aussenseite des Netzes anschliessende Schnittstelle (1) aufweist und dessen eine Aufgabe darin besteht, aus den von der Aussenseite des Netzes empfangenen Informationen selbstlenkende Pakete zu bilden, d.h. solche, die imstande sind, in dem Netz allein mittels einer jedem Paket vorangestellten Titelgruppe fortzuschreiten, und die mit dem in dem Netz verwendeten Übertragungsprotokoll übereinstimmen, dadurch gekennzeichnet, dass er ferner eine zur Innenseite des Netzes anschliessende Schnittstelle (2) umfasst, die p + 1 bidirektionale Tore (1 bis p + 1) umfasst, wovon jedes zusammengesetzt ist aus einer Empfangsschaltung (Ri) mit einem Eingang (ER) und mit p + 1 Ausgängen sowie aus einer Sendeschaltung (Ei) mit p + 1 Eingängen (EEi) und einem Ausgang (SE), wobei ein Eingang der Sendeschaltung mit einem Ausgang einer für jeden der p + 1 Eingänge verschiedenen Empfangsschaltung verbunden ist, wobei eines der bidirektionalen Tore an seinem Eingang (ER) und seinem Ausgang (SE) mit dem höheren Niveau (NS) verbunden ist und wobei der Eingang jeder Empfangsschaltung (Ri) der p anderen bidirektionalen Tore (PBi) mit dem Ausgang einer Sendeschaltung (Ei) eines Tores (PBi) eines anderen Wählers des Netzes verbunden ist.

**Claims**

1. Operator (A, B, C, D) for digital data block switching network, comprising an upper level (NS) including a microcomputer and an interface (1) towards the outside of the network, and one of its tasks being to form «self-directing» blocks from the information received from outside of the network, i.e. blocks adapted to travel within the network merely by means of a heading placed at the beginning of the block, and conforming to the transmission protocol used within the network, the operator being characterized in that it further comprises an interface (2) towards the inside of the network which comprises n bidirectional ports (PB1 to PBn) connected to the interfaces (2) towards the inside of the network of other operators of the network, and each of which is formed of a receiving circuit (R1 to Rn) having one input (ER) and n outputs (ST1 to SRn) and of a transmitter circuit (E1 to En) having n inputs (EE1 to EEn) and an output (SE), one input of the transmitter circuit being connected to an output of a receiving circuit which is different for each of the n inputs, the input of each receiving circuit of a port being connected to the output of the transmitter circuit of the port of another operator of the network.

2. Operator for a digital data block switching network in accordance with claim 1, each operator of the network having its own clock and the signals of these clocks being plesiochronous, characterized in that each receiving circuit (Ri) of each bidirectional port (PB2) comprises:
— synchronization means (10) on the «clock» level for receiving the data signals at the rhythm of the arriving clock and supplying these same signals at the rhythm of the local clock when they are enabled,
— synchronisation means (20) on the «block» level to distinguish the different phases of the transmission of one block and to generate control signals for the other circuit means of the receiving circuit and, particularly, to supply an enabling signal to the «clock» level synchronization means (10),
— parity check means (30) for parity checking of the signals delivered by the «clock» level synchronization means to allow faulty blocks to be directed towards the upper level (NS),
— label processing means (31, 33) for selecting and decoding that part of the heading which corresponds to the operator concerned and which is called a label, by means of signals supplied by the «block» level synchronization means (20),
— data processing means (32, 24, 35, 36) for restoration of the block to be transmitted after elimination of the label used, and to supply a restored block beginning indication signal by means of signals delivered by the «block» level synchronization means (20).

3. Operator for a digital data block switching network in accordance with claim 2, the data (DI) being transmitted on m parallel wires in the network, with one additional wire (PI) for the parity check and another for block end (FPI) indication, characterized in that the «clock» level synchronization means (10) consist in:
— two intermediate data storage registers (11, 12) comprising m + 2 binary elements and controlled by signals (C1, C2) such that when writing into one of them the other is read and vice versa, the outputs of each of the registers being connected to the inputs of an output multiplexer (13),

– an alternate writing logic circuit (14) common to both registers and mainly formed of a JK flip-flop (140),

– a logic reading circuit (15) comprising a phase shift correction logic formed by a D flip-flop (151) for storing a correction request, the clock input of which is connected to the local clock and the D-input of which is connected to the output of a logic EXCLUSIV-NOR-gate (152) one input of which is connected to the Q-output of the JK flip-flop (140) of the writing circuit and the other to the output of a reading addressing JK flip-flop (150) the inputs of which are on level «1» and the clock input of which is connected to the output of a logic AND-gate (153) one of the inputs of which is connected to the local clock and the other to the output of a logic NAND-gate (154) receiving the correction request signal (SD) delivered by the D-flip-flop (151) on the one hand and a correction enable signal (AC) on the other hand.

4. Operator for a digital data block switchin network in accordance with claim 2, characterized in that the «block» level synchronization means (20) comprise:

– a logic flag configuration identification circuit (21) followed by:

– a block presence detection circuit formed of a first JK flip-flop (22) the J input of which is connected to the output (RFD) of the flag configuration identification circuit (21) and the K input of which is on low logic level «0», the $\overline{Q}$ output of this first flip-flop providing the correction enable signal (AC),

– a first address word detection circuit comprising a second JK flip-flop (24) the K input of which is on logic level «0» and the J input of which is connected to the output of a logic AND-gate (25) in turn connected to the Q output of the first JK flip-flop (22) and to the output of an inverter (213) receiving the signal issued from the logic flag configuration identification circuit (21), the Q output of the second flip-flop (24) providing a signal (A1) indicating the appearance of the first address word,

– an address enabling circuit comprising a first D flip-flop (26) activated by the rising edges of the signal HL, the D input of which is connected to the Q output of the second JK flip-flop (24), and the output of which provides an address enabling signal (VAL),

– a second address word detection circuit comprising a second D flip-flop (27) activated by the rising edges of the signal HL, the D input of which is connected to the Q output of the first D flip-flop (26), and the output of which supplies a second address word detection indication signal (A2),

– a zero reset circuit comprising a third D flip-flop (23) activated by the falling edges of the local clock signal (HL), the input of which receives a delayed block end signal (FPR), and the $\overline{Q}$ output of which is connected to the zero reset inputs of the two JK flip-flops (22, 24) and the two D flip-flops (26, 27).

5. Operator for a digital data block switchin network in accordance with claims 2, 3 and 4, characterized in that the label processing means consist in an address register (31) comprising m + 1 binary elements, i.e. m for the digital data (D) plus one for the parity check (P), the inputs of the register being connected to the corresponding outputs (D, P) of the «clock» level synchronization circuit (10), the loading input «LOAD» of which receives the first address word detection signal (A1), and the «CLEAR» input of which receives the zero reset signal (RAZ), the outputs of the register being connected to the inputs of a decoder (33) controlled by the address enabling signal (VAL).

6. Operator for a digital data block switching network in accordance with claim 2, 3 and 4, characterized in that the data processiong means consist in a data register (32) comprising m + 1 binary elements, i.e. m for the digital data (D) plus one for the block end signal (FP), the inputs of this register being connected to the corresponding outputs of the «clock» level synchronization circuit (10) and the outputs of this register being connected to part of the inputs of a multiplexer (34) receiving a wired flag signal on its other inputs, and which is controlled by the second address word detection signal (A2), this multiplexer (34) providing the restored block (ND) on m + 1 parallel outputs.

7. Operator for a digital data block switching network in accordance with claims 1 or 2, characterized in that each transmitter circuit (Ei) of each bidirectional port comprises:

– storing means (40) for forming n waiting files from the signals received from the receiving stage,

– priority determination means (50) for detecting the block arrival order from the signals received by the receiving stage, for determination of a priority in case of simultaneous arrival of two or more blocks, and for generation of a coded address of the waiting file to be processed with priority,

– transmitter means (70, 71, 72) for restoring blocks conforming to the connection protocol from the signals issued from the storing means, and for transmitting the same at the rhythm of the local block in the order of their arrival,

– administration means (80) for selecting a waiting file from the coded address supplied by the priority determination means (50), for requesting a new priority address to be treated from information issued by the storing means (40), and for controlling the transmitter means (70, 71, 72),

8. Operator for a digital data block switchin network in accordance with claims 6 and 7, characterized in that:

– the storing means (40) are formed by n waiting files (FIFOi) each comprising m + 1 parallel registers of FIFO type,

– for each waiting file, the m + 1 inputs of the registers are connected to the outputs (ND) of the output multiplexer (34) of the data register (32) of a receiving circuit (Ri) different for each of the n waiting files (FIFOi), and the entrance shifting input (SIi) is connected to the output of a logic AND-gate (6i) in turn connected to the local clock (HL) and to the output of the address decoder (33) of the receiving circuit (Ri) corresponding to that file,

– and in that for each waiting file, the m + 1 outputs are connected to a group of m + 1 ports (4i) of three-state output type controlled by the same signal originating from the administration means (80), the outputs of the first ports of three-state output type (4i) of each group being interconnected, just as the outputs of the second ones etc. until the outputs of the m + 1th, and these m + 1 common points being connected to m + 1 inputs of an output multiplexer (70) forming part of the transmitting means and receiving a wired rest code on its other inputs, and which is controlled by a selection signal (SCR) originating from the administration means (80).

9. Operator for a digital data block switching network in accordance with claim 8, characterized in that the priority determination means (50) comprise:

– n priority registers of FIFO type (Pi) each associated with one waiting file (FIFOi) and each receiving an input signal (DPi) indicating a block beginning in the corresponding waiting file, issued by a logic AND-gate (5i) receiving the restored block beginning signal (DND) originating from the «block» level synchronization means (20) of the receiving circuit (Ri) of which the data (ND) originate which are at the beginning of the file (FIFOi) concerned, and the addressing signal (AD) issued from the output of the label decoder (33) of the same receiving circuit (Ri) corresponding to this same file (FIFOi), the outputs of these n AND-gates (Si) being connected to an OR-gate (500) the output of which is connected to the entrance shifting inputs of the n priority registers (Pi),

– n/D flip-flops (25i) each having its D input connected to the output of one of the n priority registers (Pi),

– a priority coder (501) the inputs of which are connected to the $\overline{Q}$ outputs of the D flip-flops (25i) and one output of which (DEP), indicating the presence of information to be coded at the input, is connected to an AND-gate (502) through an inverter (503), this AND-gate (502) being further connected to the local clock and to the output of an OR-gate (507) connected to n outputs (ORi) indicating that information is available for output on the priority registers (Pi), and having its output connected to the n exit shifting inputs of the n priority registers (Pi) on the one hand and to the n clock inputs of the nD flip-flops (25i) on the other hand.

– an intermediate storage register (504) having 1 binary elements the inputs of which are connected to the priority coder (501) and the loading input of which is connected to the output of an AND-gate (505) receiving as inputs the local clock signal (HL) and a signal (NPR) requesting a new coded priority address originating from the administration means (80), the output of this register (504) supplying a coded priority address (AP),

– and a decoder (506), the inputs of which are connected to the 1 outputs of the intermediate storage register (504) and each of the n outputs of which are connected to the zero reset input of one of the D flip-flops (25i), this decoder being controlled by a zero reset signal (RAZP) of the priority input already processed, such signal originating from the administration means (80).

10. Operator for a digital data block switching network, in accordance with claim 9, characterized in that the administration means (80) comprise:

– two decoders (81, 82) the inputs of which are connected to the 1 outputs of the intermediate storage register (504) of the priority determination means, the n outputs of the first decoder (81) being connected to the n exit shifting inputs (SOi) of the n waiting files (FIFOi) of the storage means, and the n outputs of the second decocer (82) being connected to the n control inputs of the n ports (4i) of three-state output type of these same storage means,

– a circuit (83, 84, 85, 86, 87, 88, 89, 90, 91) for recognition of beginning and end of a block at the output of the storage means, providing the selection signal (SCR) of the output multiplexer (70) of the transmitting means, which selects the wired rest code in the absence of a block and which supplies the inverted selection signal as a signal (NPR) for requesting a new priority coded address,

– a sequencing circuit formed of D flip-flops (92, 93) activated by the falling edges of the local clock signal (HL), the zero reset inputs (CL) just as the D input of the first one (92) receiving the selection signal (SCR) issued from the preceding circuit, the Q output of the first flip-flop (92) being connected to the input of the second flip-flop (93), the Q output of the first flip-flop and the $\overline{Q}$ output of the second flip-flop being connected to the inputs of a first logic AND-gate (95) the output of which is connected to the control input of the decoder (506) of the priority determination circuit (50), and the Q output of the second flip-flop just as the local clock being connected to the inputs of a second logic AND-gate (94) the output of which is connected to the control input of the first decoder (81).

11. Operator for a digital data block switching network, in accordance with claim 1, connected to p other operators of the network, characterized in that the interface (2) towards the inside of the network comprises p bidirectional ports (PBi), each formed of a receiving circuit (Ri) having one input and p + 1 outputs and a transmitting circuit (Ei) having p + 1 inputs and one output, one of the outputs of each of the receiving circuits (Ri) and one of the inputs of each transmitting circuit (Ei) being connected to the upper level (NS).

12. Operator (A, B, C, D) for a digital data block switching network, comprising an upper level (NS) comprising a microcomputer and an interface (1) towards the outside of the network and one of the tasks of which is to form self-directing blocks from the information received from outside of the network, i.e. blocks adapted to travel within the network only by means of a heading placed at the beginning of the block, and conforming to the transmission protocol used within the network, the operator being characterized in that it further comprises an interface (2) towards the inside of the network which comprises p + 1 bidirectional ports (1 to p + 1) each of which is formed of a receiving circuit (Ri) having one input (ER) and p + 1 outputs and of a transmitting circuit (Ei) having p + 1 inputs (EEi) and one output (SE), an input of the transmitting circuit being connected to an output of a receiving circuit different for each of the p + 1 inputs, one of the bidirectional ports having its input (ER) and its output (SE) connected to the upper level (NS), and the input of each receiving circuit (Ri) of the p other bidirectional ports (PBi) being connected to the output of a transmitting circuit (Ei) of a port (PBi) of another operator of the network.

Fig.1

Fig.2

Fig.3a

Fig.3b

Fig.4

Fig.5

Fig.7

4/6

Fig.6a

Fig.6b

Fig.8

# Fig.9

# Fig.10